# EUROPÄISCHE PATENTSCHRIFT

(11) **EP 0 850 388 B1**
(45) Veröffentlichungstag und Bekanntmachung des Hinweises auf die Patenterteilung: **19.07.2000**
(21) Anmeldenummer: 96932511.7
(22) Anmeldetag: 12.09.1996
(51) Int. Cl.: F24D 11/00, F28D 20/00

(54) **ENERGIEANLAGE FÜR GEBÄUDE**
ENERGY SYSTEM FOR BUILDINGS
INSTALLATION DE PRODUCTION D'ENERGIE POUR BATIMENTS

(30) Priorität: 12.09.1995 DE 19533475
(43) Veröffentlichungstag der Anmeldung: 01.07.1998
(73) Patentinhaber: Krecke, Edmond Dominique, L-6315 Beaufort (LU)
(72) Erfinder: Krecke, Edmond Dominique, L-6315 Beaufort (LU)
(74) Vertreter: Blumbach, Kramer & Partner GbR
(86) Internationale Anmeldenummer: EP9604009
(87) Internationale Veröffentlichungsnummer: WO9710474

(56) Entgegenhaltungen:
- DE-A- 2 948 417
- DE-A- 3 312 329
- FR-A- 2 495 741
- GB-A- 2 054 824
- US-A- 3 262 493

## Beschreibung

Die Erfindung betrifft eine Energieanlage für Gebäude.

Solarenergieanlagen sind seit langem bekannt und werden zunehmend zur Energieeinsparung eingesetzt. Insbesondere nutzt man dabei die durch direkte Sonneneinstrahlung erzeugte Wärme in Solar-Absorbern zur Erhitzung oder Vorwärmung von Brauchwasser sowie auch in Heizungsanlagen. Bekannt ist es auch schon, die jeweils nicht sofort benötigte Wärmeenergie zunächst zu speichern, indem beispielsweise Wasser in einem Tank erwärmt wird. Später kann dann mit Hilfe von Wärmetauschern dem Speicher die Wärmeenergie wieder entnommen werden.

Bei der Energiebilanz eines Gebäudes spielt neben der Energiezufuhr in Form von Solarenergie oder Verbrennungsenergie insbesondere auch die Wärmeisolation eine entscheidende Rolle. Hier sind wesentliche Fortschritte durch Wärmedämmstoffe im Bereich der Außenwände und des Daches erzielt worden.

Aus der DE-A-33 12 329 ist eine Energieanlage für Gebäude unter Verwendung von Solarabsorbern, Wärmetauschern und Wärmespeichern mit den Merkmalen a) bis c) sowie teilweise d) bekannt. Unter dem Gebäude ist ein Feststoff-Wärmespeicher angeordnet, dem Wärme zugeführt oder entnommen werden kann. Der Feststoff-Wärmespeicher ist in wenigstens zwei Bereiche, nämlich einen zentralen und einen mittleren/äußeren Bereich mit je einem eigenen Flüssigkeitskreislauf unterteilt. Der Wärmespeicherbetrieb erfolgt derart, daß primär oder vorrangig der Flüssigkeitskreislauf des höher temperierten, zentralen Wärmespeicherbereichs beaufschlagt wird. Der Wärmeentnahmebetrieb erfolgt derart, daß primär oder vorrangig der Flüssigkeitskreislauf des mittleren/äußeren Wärmespeicherbereichs beaufschlagt wird. Es werden jedoch keinerlei Hinweise gegeben, wie hinsichtlich der Merkmale a) und b) des Anspruchs 1 die Solar-Adsorber ausgebildet sind. Ferner werden hinsichtlich des letzten Abschnitts des Merkmals e) bezüglich des Wärmespeicherbetriebs keinerlei Differenzwerte zur Temperatur des jeweiligen Wärmespeicherbereichs angegeben.

Der Erfindung liegt daher die Aufgabe zugrunde, die Wärmebilanz auf kostengünstige Weise zu verbessern.

Diese Aufgabe wird erfindungsgemäß durch die Merkmale des kennzeichnenden Teils des Anspruchs 1 gelöst. vorteilhafte und bevorzugte Weitergestaltungen sind in den Unteransprüchen aufgeführt.

Die Vorteile der Erfindung bestehen darin, daß der Solarabsorber gemäß den kennzeichnenden Merkmalen und insbesondere nach dem e) wesentlich kostengünstiger ist als bekannte Solar-Absorber, die in Form von Platten zusätzlich auf dem Dach angebracht werden. Durch die Verlegung der Schläuche oder Rohre zwischen der Dachhaut, die im allgemeinen aus Dachziegeln besteht, und der Dämmschicht sind außer den Schläuchen oder Rohren keine zusätzlichen Bauteile erforderlich. Außerdem wird das äußere Bild des Gehäuses nicht beeinträchtigt.

Die Unterteilung des Solarabsorbers gemäß Merkmal f) in wenigstens zwei Bereiche mit je einem eigenen Flüssigkeitskreislauf sorgt dafür, daß nicht eine mittlere Mischtemperatur am Ausgang des Solarabsorbers erzeugt wird, sondern daß die im Absorber erwärmten Flüssigkeiten getrennt nach ihrer jeweiligen Temperatur ausgenutzt werden können. Die Flüssigkeit mit der höheren Temperatur kann beispielsweise einen Wärmespeicher auch dann noch weiter aufladen, wenn die mittlere Mischtemperatur unterhalb der Temperatur des Wärmespeichers liegt.

Der Feststoff-Wärmespeicher gemäß Merkmal c) ist ebenfalls in wenigstens zwei Bereiche unterteilt. Dabei hat der zentrale Bereich die höhere Temperatur. Die Bereiche mit niedrigerer Temperatur können demnach auch durch Absorberflüssigkeiten noch weiter aufgeladen werden, wenn deren Temperatur niedriger als die des zentralen Bereichs ist. Dadurch läßt sich eine sehr gute Energiebilanz erzielen. Das Merkmal e) beschreibt den durch Thermofühler gesteuerten Betrieb genauer. Entsprechendes gilt für die Merkmale f) für den Betrieb, bei dem den Speicherbereichen Wärmeenergie zur Beheizung des Gebäudes entnommen wird.

Weiterbildungen der Erfindung sind Gegenstand der Unteransprüche. So kann vorgesehen sein, daß der Solar-Absorber in wenigstens drei Bereiche unterteilt ist, die unterschiedlich orientierten Dachabschnitten zugeordnet sind. Dadurch läßt sich eine noch bessere Trennung zwischen den unterschiedlichen Temperaturbereichen erzielen, die von der geographischen Orientierung der Dachabschnitte abhängen.

Die Schläuche oder Rohre des Solarabsorbers können zweckmäßig in mäanderförmigen Rinnen oder Nuten der Dämmschicht verlegt werden. Sie sind dann sicher untergebracht, ohne zusätzlich die Dicke der Dämmschicht oder der Dachhaut zu erhöhen.

Der äußere Bereich des Feststoff-Wärmespeichers wird auf vorteilhafte Weise trichterförmig nach unten erweitert, wobei die außerhalb des Gebäudegrundrisses liegenden Abschnitte durch eine Wärmedämmschicht abgedeckt sind. Auf diese Weise läßt sich die aus dem Erdinneren aufsteigende Wärmeenergie in größerem Umfang ausnutzen. Selbst im Winter bei Temperaturen unter dem Gefrierpunkt ist das Erdreich aufgrund der aufsteigenden Energie wesentlich wärmer. Beispielsweise liegt eine mittlere Temperatur in einer Tiefe von 2 m bei freier Oberfläche bei etwa +7 bis +9 °C. Unter dem Gebäude beträgt die Temperatur in dieser Tiefe mindestens etwa +14 bis +16 °C. Der gleiche Effekt zur Ausnutzung der Erdwärme ergibt sich beispielsweise beim Abdecken von Pflanzungen. Hier wird verhindert, daß die aufsteigende Erdwärme sofort wieder abstrahlt. Damit läßt sich eine Frostsicherung erreichen.

Der Feststoff-Wärmespeicher kann mit Vorteil in drei Bereiche unterteilt sein, nämlich den zentralen Bereich, einen den zentralen Bereich umgebenden mittleren Bereich und einen den mittleren Bereich umgebenden äußeren Bereich. Dadurch läßt sich eine noch feinere Abstufung des Temperaturniveaus der einzelnen Speicherbereiche erzielen.

Der äußere Bereich des Feststoff-Wärmespeichers kann darüber hinaus von einem peripheren Speicherbereich umgeben sein. Dadurch wird die Gewinnung weiterer Erdwärme ermöglicht. Insbesondere kann aber der pheriphere Speicher auch benutzt werden, um im Sommer mit Hilfe der kalten Flüssigkeit eine Kühlung im Gebäude zu erzielen.

Durch die verschiedenen, schalenförmig den zentralen Bereich umgebenden, aber möglichst nach unten offenen Speicherbereiche mit jeweils geringerer Temperatur wird erreicht, daß der zentrale Bereich besser isoliert ist und weniger Wärme verliert, weil der umgebende mittlere Bereich weniger kalt ist als das Erdreich. Entsprechendes gilt auch für den äußeren Speicherbereich. Der seitliche Wärmeabfluß des Speichers wird weitgehend durch die trichterförmige Gestaltung des äußeren Speicherbereichs kompensiert. Außerdem kann durch die Unterteilung des Speichers in mehrere Bereiche auch die geringste Solarwärme mit niedriger Temperatur noch genutzt werden, indem die Flüssigkeit aus den Solarabsorberbereichen im äußeren oder peripheren Bereich der Feststoffspeicher geleitet werden. Damit kann die Solarenergie auch noch im Winter bei Absorbertemperaturen zwischen 8° und 15°C durch Aufladung des peripheren Speicherbereichs ausgenutzt werden. Auf diese Weise wird der "Schutzmantel" um den zentralen Speicherbereich durch Erwärmung verbessert. Insgesamt wird es damit möglich, das gefürchtete Energieloch der konventionellen Solarheizungstechnik in den Monaten Dezember bis März zu überbrücken.

Wenigstens ein Teil der oder auch alle Außenwände weisen zweckmäßig je ein flüssigkeitsdurchströmtes Schlauch- oder Rohrsystem zur Übertragung von Wärme aus der Wand an die Flüssigkeit oder umgekehrt auf, wobei die Schlauch- oder Rohrsysteme in einen Kreislauf mit einer Pumpe für die Flüssigkeit schaltbar sind. Auf diese Weise kann ein Wärmeaustausch zwischen der sonnenseitigen und der schattenseitigen Außenwand stattfindet. Ein solcher "Nord-Süd-Ausgleich" kann den Wärmehaushalt des Gebäudes wesentlich verbessern, wenn im Sommer Wärme aus der heißen Südwand an die kalte Nordwand abgegeben wird. Das führt auch im Winter zu einer gleichmäßigeren Wärmeverteilung im Gebäude. Zweckmäßig können zusätzlich die Gebäudeaußenwände auf der Außenseite mit einer absorptionserhöhenden, transparenten Beschichtung oder Verkleidung versehen sein, um eine bessere Energieausbeute zu erreichen. Eine solche transparente Wärmedämmung wird auch als "TWD" bezeichnet.

Eine Weiterbildung der Erfindung sieht außerdem vor, daß die Schlauch- oder Rohrsysteme der Gebäudeaußenwände über thermisch gesteuerte Ventile mit den Flüssigkeitskreisläufen der Bereiche des Feststoff-Wärmespeichers verbunden sind. Dann kann die eingestrahlte Energie im Sommer gespeichert und außerdem kühle Flüssigkeit, insbesondere aus dem peripheren Speicher, zur Kühlung den Schlauch- oder Rohrsystemen in den Außenwänden zugeleitet werden. Im Winter können die Rohrsysteme der Gebäudeaußenwände mit Vorteil als Heizungsanlage benutzt werden. Außerdem läßt sich im Winter, insbesondere im Fall einer Beschichtung oder Verkleidung mit absorptionserhöhendem Material (TWD) zusätzlich Wärmeenergie gewinnen.

Die Schlauch- oder Rohrsysteme in den Gebäudeaußenwänden ermöglichen demgemäß eine Vielzahl von Klimatisierungsvorgängen und Kompensationsfunktionen und werden daher auch als Außenwand-Klimatisierungs- und-Kompensationssystem (AKK-System) bezeichnet. Zu den Funktionen gehören der erläuterte Nord-Süd-Ausgleich, eine Klimatisierung in den Sommermonaten durch Abführen überschüssiger Solarwärme, eine Kompensation von Transmissionswärmeverlusten in den Wintermonaten durch eine Temperierung mittels gespeicherter Energie sowie die Funktion als Wandheizung. Damit kann zweckmäßig eine Ringleitung im Estricht verlegt werden, von der Stichleitungen zu den Außenwänden der einzelnen Räume führen. Thermostatventile in diesen Stichleitungen erlauben eine individuelle Temperaturregelung jedes einzelnen Raums. Eine solche großflächige Heizung war schon in römischer Zeit als Hypokausten-Heizung bekannt und diente der Beheizung von Villen und Thermen. Mit einem solchen System wird auch die Temperierung von denkmalgeschützten Bauten bei gleichzeitiger thermischer Mauerwerkstrockenlegung ermöglicht. Feststoffspeicher lassen sich dabei meist im Keller solcher Gebäude unterbringen. Solarabsorber können ohne äußere Beeinträchtigung des Gebäudes nachträglich bei Dachreparaturen vorgesehen werden. Gegebenenfalls kann man Solarabsorber aber auch außerhalb des Gebäudes erstellen oder gegebenenfalls ohne die Absorber auskommen.

Das AKK-System kann auch Taupunktprobleme in gefährdeten Bauteilbereichen durch Trockenhaltung und einen Kondensationsschutz in Bereichen aufsteigender Feuchtigkeit bzw. in Bereichen erdberührter Bauteile vermeiden. Schließlich kann an die Kreisläufe des AKK-Systems eine Not- und Zusatzheizung geringer Leistung (wenige kW) für extreme Witterungsbedingungen oder auch für nicht kalkulierbare Nutzungsgewohnheiten mit mangelnder Energiedisziplin angeschlossen werden.

Ein Brauchwasser-Wärmetauscher kann als Bypass und mit Priorität über thermisch gesteuerte Ventile an denjenigen Bereich des Solar-Absorbers angeschlossen werden, welcher die höchste Temperatur hat. Auf diese Weise kann eine Erwärmung oder Vorwärmung des Brauchwassers auf mehr als 40°C erreicht werden. Der Feststoff-Wärmespeicher enthält zweckmäßig wegen der niedrigen Kosten und der hohen spezifischen Wärme als Speichermaterial eine Schotter- oder Kiespackung mit einer Stärke von wenigstens 60 cm. Zusätzlich können in den zentralen Bereich des Feststoff-Wärmespeichers Stahlträger, Autowürfel (würfelförmig zusammengepreßte Altautos) und ähnliches Material mit möglichst hoher spezifischer Wärme eingelagert werden. Gleichzeitig wird damit eine Entsorgung erreicht, die sogar noch bezahlt wird.

Der Wärmespeicher insgesamt oder insbesondere sein zentraler Bereich können bodenseitig durch eine Wärmedämmschicht isoliert werden. Dadurch wird eine Energieabgabe aus Bereichen des Wärmespeichers verhindert, die höhere Temperatur als der darunter befindliche Erdboden haben. Im äußeren Bereich und insbesondere im peripheren Bereich kann dagegen eine Wärmeisolation unzweckmäßig sein, wenn die aus dem Erdinneren aufsteigende Wärme mit höherer Temperatur als der jeweilige Speicherbereich ankommt. Als Flüssigkeit für alle Kreisläufe wird Wasser oder ein Frostschutzmittel üblicher Art verwendet.

In den einzelnen Bereichen des Solarabsorbers, des Feststoff-Wärmespeichers und der Gebäudeheizung, die zweckmäßig als Fußbodenheizung oder Außenwandheizung ausgelegt ist, sind gegebenenfalls Umwälzpumpen nötig, die hier nicht im einzelnen beschrieben werden, weil der Fachmann den jeweiligen Einsatz im Einzelfall ohne Schwierigkeiten überblicken kann.

Moderne Gebäude sind so gut abgedichtet, daß periodische Lüftungen unumgänglich sind. Dadurch ergeben sich aber Wärmeverluste bzw. im Sommer eine unerwünschte zusätzliche Wärmezufuhr. Eine Weiterbildung der Erfindung sieht hier vor, daß zum Luftaustausch Öffnungen, insbesondere in den Fensterrahmen, vorgesehen sind, in denen an die Schlauch- oder Rohrsysteme der Gebäudeaußenwände angeschlossene Wärmetauscher mit von den Flüssigkeiten durchströmten Lamellen angeordnet sind. Dann kann im Winter die nach innen strömende Luft durch die Wärmetauscher unter Rückgewinnung der Energie vorerwärmt und im Sommer eine entsprechende Abkühlung der einströmenden Luft erreicht werden.

Eine andere Lösung des Belüftungsproblems sieht vor, daß ein äußerer, um den peripheren Speicherbereich herum angeordneter Erdkanal und ein innerer, im Feststoffspeicher verlaufender Ansaugkanal vorgesehen sind. Gesteuert durch ein Mehrwegeventil kann dann im Sommerbetrieb gekühlte Luft durch den äußeren Kanal und im Winterbetrieb vorgewärmte Luft durch den inneren Kanal angesaugt und in das Gebäude geleitet werden.

Nachfolgend werden Ausführungsbeispiele anhand der Zeichnung beschrieben. Es zeigen:
- Fig. 1: schematisch ein Gebäude mit den verschiedenen Systemen und Vorrichtungen nach der Erfindung,
- Fig. 2: eine Abwandlung des Ausführungsbeispiels nach Fig. 1,
- Fig. 3: schematisch eine Variante des Gebäudes gemäß Fig. 1,
- Fig. 4: eine perspektivische Teilansicht einer Gebäudeaußenwand mit einer äußeren Dämmschicht, und
- Fig. 5: schematisch eine perspektivische Teilansicht einer Gebäudeaußenwand mit einer inneren Dämmschicht.

Die Außenwände 1, 2 das Hauses sind in einer Schalungsbauweise aus Beton mit einer isolierenden Dämmschicht la, 2a versehen, die beispielsweise eine Dicke von wenigstens 25 cm besitzt und aus einem Styropro-Hartschaum besteht. Die Bodenplatte 3 des Hauses ist ebenfalls aus Beton gegossen und mit einer Isolierschicht 3a versehen. Von der Bodenplatte 3 und den Außenwänden 1, 2 aus erstreckt sich die Wärmedämmschicht 4. In der Zeichnung sind solche Dämmschichten 4 nur an den beiden dargestellten Seiten mit den Außenwänden 1, 2 gezeigt. Die Vorder- und Rückwand des Hauses ist jedoch gleich gestaltet.

Die schrägen Wärmedämmschichten 4 bilden zusammen mit der Bodenplatte 3 einen Raum für einen Feststoff-Wärmespeicher, der beispielsweise ein Schotter- oder Kiesbett (nicht im einzelnen gezeigt) mit zusätzlichen Speicherkörpern enthält, die nachfolgend noch genauer beschrieben werden sollen.

Das Dach des Hauses enthält auf einem üblichen Unterbau 5 aus beispielsweise Holzsparren und eventuell Brettern eine Wärmedämmschicht 6 mit einer Stärke von etwa 18 cm und aus dem gleichen Material wie die Wärmedämmschichten 1a, 2a der Außenwände 1, 2. Auf der Oberseite der Wärmedämmschicht sind mäanderförmig Rohrleitungen 7, 8 (Polypropylenrohre 20x2) in Rinnen oder Nuten der Dämmschicht 6 unterhalb der Dachhaut (nicht gezeigt) in Form von möglichst schwarzen Dachziegeln verlegt. Die Rohrleitungen 7, 8 bilden auf den beiden dargestellten Seiten des Hauses getrennte Flüssigkeitskreisläufe, die über thermisch gesteuerte Ventile 9, 10 an gemeinsame Kollektoren 11, 12 für die warme bzw. kalte Seite der Rohrleitungssysteme angeschlossen sind. Die Ventile 9, 10 sind hier wie auch alle anderen Ventile zur Vereinfachung als Kreuz in der jeweiligen Leitung dargestellt. Von den Kollektoren 11, 12 führen Rohrleitungen 13, 14 zu weiteren Kollektoren 15, 16 , die auch mit den Kollektoren 11, 12 zu einer Einheit zusammengefaßt werden können.

Zur möglichst vollständigen Ausnutzung der Solarenergie können als Alternative (nicht dargestellt) die Kreisläufe der einzelnen Solarbereiche aber auch einzeln solchen Kollektoren in Form von kurzen Rohrstücken zugeführt werden. Dabei münden die Kreisläufe beispielsweise an den Stirnwänden der Kollektoren, so daß die Flüssigkeit dauernd im Kreislauf umläuft bzw. umgepumpt wird. Von der Peripherie der Kollektoren nahe den Enden führen zwei Rohre oder Schläuche zu den weiteren Kollektoren 15, 16, wobei in eines der Rohre oder Schläuche ein thermisch gesteuertes Ventil eingefügt ist. Dann kann nach Öffnen des jeweiligen Ventils die Flüssigkeit (der größte Teil der) dem zweckmäßigen Speicherbereich zugeführt werden.

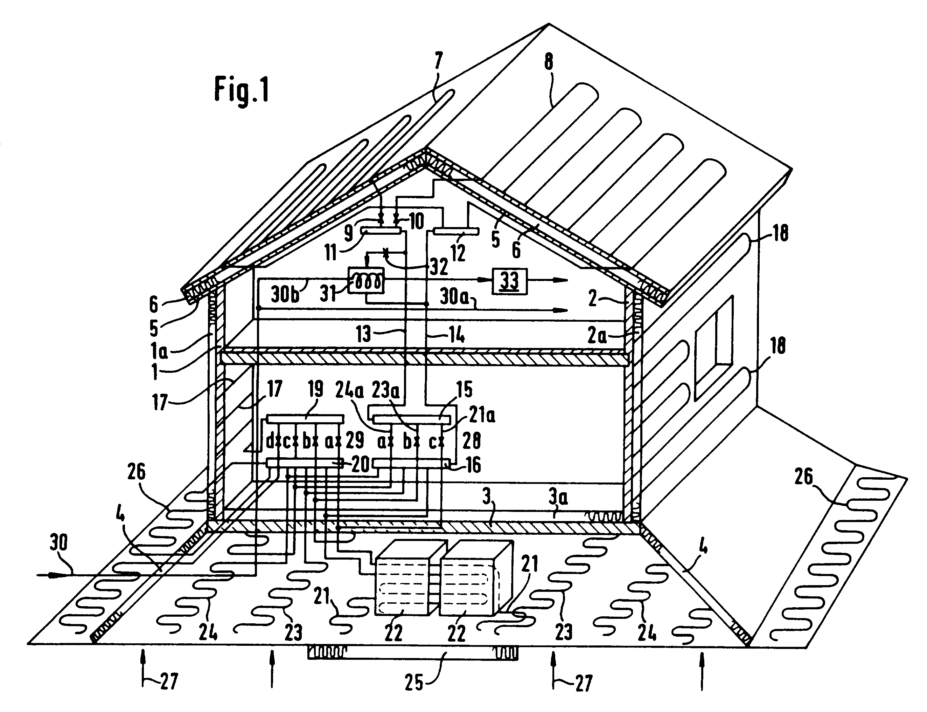

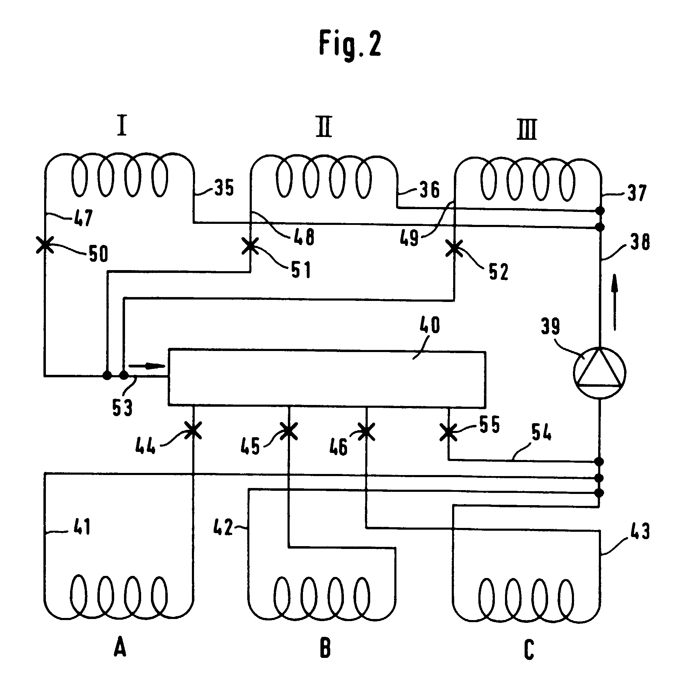

Fig. 2 zeigt eine weitere Alternative für die Verbindungen zwischen Solarabsorberbereichen I, II und III. Dabei können beispielsweise die Bereiche I und II den Flüssigkeitskreisläufen mit den Rohrleitungen 7, 8 gemäß Fig. 1 entsprechen. Der Bereich III ist zusätzlich vorhanden. Die Vorläufe 35, 36 und 37 der Bereiche I, II bzw. III sind zu einer gemeinsamen Leitung 38 zusammengefaßt und führen über eine Umwälzpumpe 39 einerseits zu einem Kollektor 40 und außerdem zu den Rückläufen 41, 42 bzw. 43 des zentralen Feststoffspeicherbereichs C, der dem Kreislauf 21 in Fig. 1 entspricht, sowie den Abschnitten A, B, die den Kreisläufen 24 bzw. 23 in Fig. 1 entsprechen. Die Vorläufe der Speicherbereiche A, B, C sind über thermisch gesteuerte Ventile 44, 45 bzw. 46 mit dem Kollektor verbunden. Zur Vervollständigung der Kreisläufe sind die Rückläufe 47, 48 und 49 der Absorberbereiche I, II bzw. III über thermisch gesteuerte Ventile 50, 51 und 52 an eine gemeinsame Leitung 53 angeschlossen, die in den Kollektor 40 führt. Außerdem ist eine Leitung 54 zwischen dem Eingang der Pumpe 39 und dem Kollektor 40 vorhanden. Diese Leitung enthält ein weiteres thermisch gesteuertes Ventil 55.

Die thermisch gesteuerten Ventile 50, 51 und 52 sind zweckmäßig Ventile, die über Thermofühler und Relais gesteuert werden. Für die Ventile 44, 45, 46 werden dagegen zweckmäßig von Hand einstellbare Thermostatventile verwendet.

Zur Erläuterung verschiedener Betriebszustände sei beispielsweise davon ausgegangen, daß die Feststoffspeicherbereiche folgende Temperaturen aufweisen:

| | |
|---|---|
| äußerer Speicherbereich | A = + 16 °C bis 24 °C |
| mittlerer Speicherbereich | B = + 25 °C bis 34 °C |
| zentraler Speicherbereich | C = + 35 °C und höher. |

Der periphere Speicherbereich hat eine Temperatur zwischen +7° und +15°C.

### Beispiel 1:

| | |
|---|---|
| Außentemperatur | - 4 °C |
| Dachabsorberbereiche | maximal + 8 °C |

Die Ventile 50, 51, 52, 55 bleiben geschlossen, die Pumpe 39 ist ausgeschaltet. Es kann dann also keine Wärme an den Feststoffspeicher mit den Bereichen A, B, C abgegeben werden, weil die maximale Temperatur der Flüssigkeit von den Solarabsorberbereichen noch unter der Temperatur des Feststoffspeicherbereichs A mit der niedrigsten Temperatur liegt.

### Beispiel 2:

| | |
|---|---|
| Außentemperatur | + 6 °C |
| Solarabsorberbereich I | + 26 °C |
| Solarabsorberbereiche II und III | + 12 °C |

Die Ventile 44, 45, 46, 55 werden geöffnet, die Pumpe 39 ist eingeschaltet. Das Ventil 44 öffnet, wenn die Temperatur des Speicherbereichs A wenigstens 2 °C unter der Temperatur der Flüssigkeit im Kollektor 40 liegt.

### Beispiel 3:

| | |
|---|---|
| Außentemperatur | + 36 °C |
| Temperatur der Dachabsorberbereiche I, II, III | + 64 °C bis + 75 °C |

Die Ventile 50, 51, 52 und 55 sowie das Ventil 46, das zum zentralen Speicherbereich C führt, werden geöffnet. Dann wird der zentrale Speicherbereich C mit der verhältnismäßig hohen Temperatur der Flüssigkeit vom Solarabsorber aufgeladen.

Im Winterbetrieb besteht außerdem die Möglichkeit, die Pumpe sowie die Ventile 50, 51, 52 und 55 über Relaisschaltkreise nur über Intervalle kurzzeitig zu öffnen.

In den Außenwänden 1, 2 sind mäanderförmig weitere Rohrleitungssysteme 17 bzw. 18 verlegt, die an Kollektoren 19, 20 angeschlossen sind. Diese Anschlüsse sind nur für das Rohrleitungssystem 17 dargestellt. Das Rohrleitungssystem 18 führt jedoch in gleicher Weise zu den Kollektoren 19, 20. Auf diese Weise besteht die Möglichkeit eines Nord-Süd-Wärmeaustauschs durch Umpumpen der wärmeren Flüssigkeit auf der einen Seite zur kälteren Flüssigkeit auf der anderen Seite und umgekehrt. Außerdem kann aber, wie noch erläutert wird, warmes Wasser aus den Rohrleitungssystemen 17, 18 dem Feststoffspeicher zugeführt bzw. kaltes Wasser zur Abkühlung in die Rohrsysteme 17, 18 gepumpt werden.

Der Feststoffspeicher ist in insgesamt vier Bereiche mit unterschiedlichem Temperaturbereich aufgeteilt. Der zentrale Bereich, der durch mäanderförmige, in das Material des Feststoffspeichers eingebettete Rohrleitungen 21 definiert ist, die einen geschlossenen Kreislauf bilden, weist im Schotter- bzw. Kiesbett mit einer Schutzschicht zusätzliche Metallpakete 22 auf, die ebenfalls von den Rohrleitungen 21 durchlaufen oder umfaßt werden. Dadurch hat der zentrale Bereich 21, 22, der die höchste Speichertemperatur hat, auch eine erhöhte Wärmekapazität. Die Einbettung der Rohrleitungen 21 erfolgt zweckmäßig mit einer Zwischen- oder Schutzschicht (nicht dargestellt) aus Beton oder ähnlichem Material.

Der Feststoffspeicher weist einen mittleren, dem zentralen Bereich 21, 22 nahegelegenen Bereich auf, der durch einen Flüssigkeitskreislauf mit mäanderförmig verlaufenden Rohren 23 definiert ist, und einen äußeren Bereich, der den mittleren Bereich 23 umgibt, und durch einen Flüssigkeitskreislauf mit mäanderförmig verlaufenden Rohren 24 definiert ist. Die Rohre 23, 24 sind dabei in das Schotter- bzw. Kiesbett mit einer Schutzschicht eingebettet. Unterhalb des zentralen Bereichs 21, 22 befindet sich eine Wärmedämmschicht, die Wärmeverluste aus dem verhältnismäßig warmen, zentralen Bereich 21, 22 nach unten verhindert.

Der äußere Speicherbereich 24 wird von einem peripheren Speicherbereich mit einem Flüssigkeitssystem aus mäanderförmig verlegten Rohren 26 umgeben. Der periphere Bereich 26 sammelt ebenso wie die weiteren Bereiche des Feststoffspeichers Erdwärme (geothermische Energie), die durch Pfeile 27 symbolisiert ist. Insbesondere der periphere Bereich 26 kann aber auch im Sommer benutzt werden, um kühle Flüssigkeit zur Kühlung des Gebäudes den Außenwand-Rohrsystemen 17, 18 zuzuführen.

Gemäß Fig. 1 erfolgt die Verteilung der aus den Solar-Absorbern 7, 8 kommenden, aufgewärmten Flüssigkeiten auf die einzelnen Speicherbereiche mit Hilfe der Kollektoren 15, 16. Dabei sind in die Rohrleitungen 21a, 23a, 24a, die den Speicherbereichen 22 bzw. 23 bzw. 24 Flüssigkeiten zuführen, jeweils thermisch gesteuerte Ventile 28a, b, c angeordnet. Wenn beispielsweise die Temperatur der vom Solarabsorber kommenden Flüssigkeit hoch ist, beispielsweise zwischen 25 und 35°C liegt, so wird die Flüssigkeit über das Ventil 28c dem zentralen Speicher mit dem Flüssigkeitskreislauf 21 zugeführt. Wenn die Temperatur beispielweise zwischen 15 und 24°C liegt, wird der mittlere äußeren Speicherbereich 23 aufgeladen. Schließlich wird die warme Flüssigkeit dem äußeren Speicherbereichs 24 zugeführt, wenn beispielsweise die Temperatur zwischen 7 und 14°C liegt.

Über Kollektoren 19, 20 kann Wärme aus den Speicherbereichen 21, 23, 24, 26 über Ventile 29a, b, c, d den Außenwand-Flüssigkeitssystemen 17 und 18 zur Heizung des Gebäudes zugeführt werden. Die Ventile 29a, b, c, d sind ebenfalls thermisch gesteuert, so daß die Systeme 17, 18 jeweils mit einer Flüssigkeit der erforderlichen Temperatur beaufschlagt werden. Es besteht auch die Möglichkeit, im Sommer zur Kühlung kalte Flüssigkeit aus dem peripheren Speicher 26 den Systemen 17, 18 über das Ventil 29d zuzuführen.

Trinkwasser wird im Gebäude über eine Leitung 30 zugeführt, die über eine Abzweigleitung 30a die Verbraucher speist. Eine weitere Leitung 30b führt zu einem nur schematisch dargestellten Wärmetauscher 31. Dieser Wärmetauscher wird über ein thermisch gesteuertes Ventil 32 aus dem Kollektor 11 mit warmer Flüssigkeit im Bypass gespeist. Dadurch kann das durchströmende Wasser auf eine Temperatur von beispielsweise 38°C aufgeheizt bzw. vorgewärmt werden. Ein nachgeschalteter Boiler oder Durchlauferhitzer sorgt für eine Vorratshaltung und gegebenenfalls weitere Aufheizung des vorgewärmten Brauchwassers. Anstelle des Wärmetauschers 31 können auch im zentralen Speicherbereich 21 eingebettete Leitungen (nicht dargestellt) in Form von beispielsweise Polyethylenrohren verwendet werden. Der zentrale Speicherbereich arbeitet dann als Wärmetauscher.

Alle dargestellten Ventile können Thermostatventile sein, die sich von Hand auf die gewünschten Temperaturen einstellen lassen, und zwar auch derart, daß die Ventile am Anfang eines einstellbaren Temperaturbereichs öffnen und am Ende des Bereichs wieder schließen. Es besteht aber auch die Möglichkeit, alle Ventile zentral über einen Rechner nach einem vorgegebenen Programm über Relais oder Stellmotoren zu steuern. Dadurch erreicht man maximale Flexibilität unter den verschiedenen Witterungsbedingungen und Wetterabläufen.

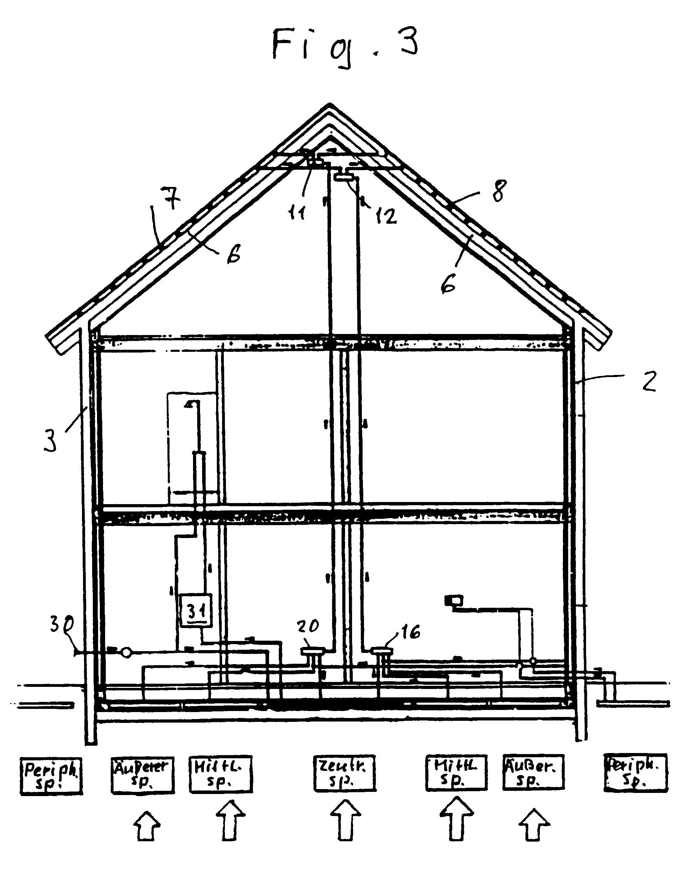

Fig. 3 zeigt einen Schnitt durch ein Gebäude ähnlich wie in Fig. 1. Die wesentlichen Bestandteile einschließlich des Dachabsorbers, des Feststoffspeichers, der Wandkreisläufe, der Kollektoren und der verbindenden Rohrleitungen sind die gleichen. Die Darstellung in Fig. 3 entspricht jedoch genauer den tatsächlichen Verhältnissen in einem Gebäude. Insbesondere ist zu erkennen, daß die zusätzlichen Bauteile nur wenig Platz beanspruchen und den Gebäudeaufbau nicht wesentlich komplizieren. Der Feststoffspeicher ist nur schematisch mit dem zentralen, dem mittleren, dem äußeren und dem peripheren Bereich dargestellt. In dem Praxis hat der zentrale Bereich eine Temperatur von 38°C und mehr, der mittlere Bereich eine Temperatur zwischen 25 und 34°C, der äußere Bereich eine Temperatur zwischen 15 und 24°C und der periphere Bereich eine Temperatur zwischen 7 und 14°C.

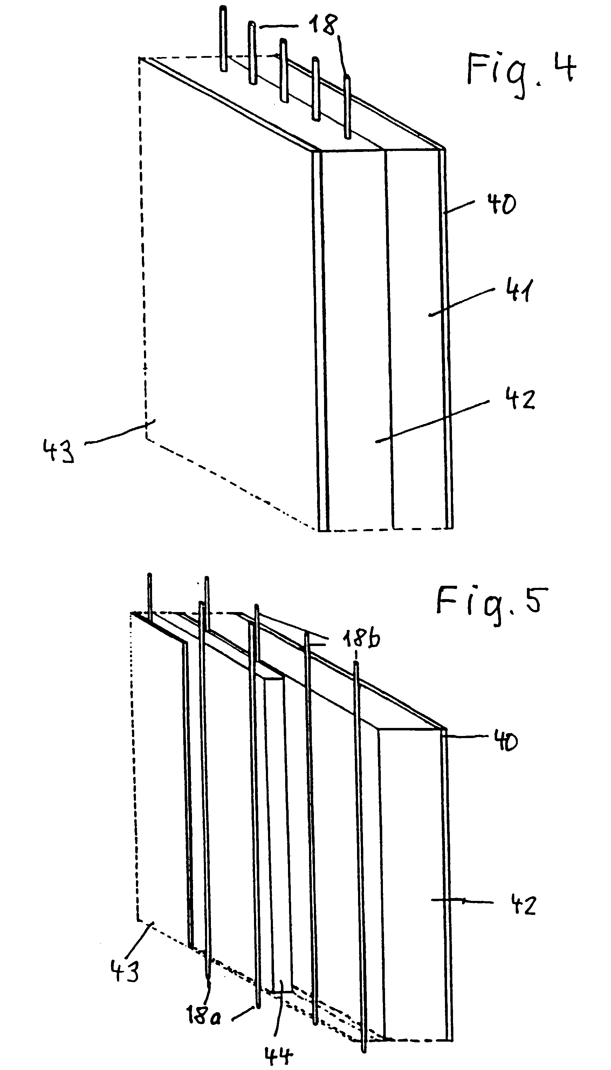

Fig. 4 zeigt schematisch den Aufbau einer Außenwand mit einer äußeren Putzschicht 40, einer äußeren Dämmschicht 41 mit einer Stärke zwischen 10 und 25 cm, einer Massivwand 42 aus beispielsweise Leichtbeton und im Inneren des Gebäudes mit einer Spanplattenbeplankung 43, die bereits tapezierfähig sein kann. In der Massivwand 42 verlaufen die Rohre oder Schläuche 18, die eine Erwärmung oder Kühlung entsprechend der obigen Erläuterung ermöglichen.

In Fig. 5 ist ein Wandausschnitt eines Gebäudes, beispielsweise eines denkmalgeschützten Gebäudes dargestellt, bei dem die äußere Fassade nicht verändert werden kann. Die vorhandene Massivwand weist eine vorhandene oder erneuerte Putzschicht 40 auf. Auf die Innenseite der Massivwand 42 sind die Rücklaufrohre 18b des Rohr- bzw. Schlauchsystems 18 aufgelegt. Dann folgt gegebenenfalls nach Auffüllung (nicht gezeigt) der Zwischenräume zwischen den Rohren 18b eine Dämmschicht 44, auf die gegebenenfalls in Nuten (nicht dargestellt) die Vorlaufrohre 18a versetzt gegen die Rücklaufrohre 18b aufgelegt sind. Den Abschluß bildet eine Innenwandverkleidung 43. Über die Vorlaufrohre 18b erfolgt dann als Wandheizung eine Erwärmung der Innenräume und die Rücklaufrohre 18b ermöglichen eine Erwärmung der äußeren Massivwand 42 derart, daß eine thermische Trocknung und Trockenhaltung ermöglicht wird.

## Patentansprüche

1. Energieanlage für Gebäude unter Verwendung von Solarabsorbern, Wärmetauschern und Wärmespeichern mit folgenden Merkmalen:
**a)** unter dem Gebäude ist ein Feststoff-Wärmespeicher (21, 22, 23, 24, 26) angeordnet, dem Wärme mittels im Feststoff-Wärmespeicher verlegten Schläuchen oder Rohren zugeführt oder entnommen werden kann,
**b)** der Feststoff-Wärmespeicher ist in wenigstens zwei Bereiche, nämlich einen zentralen (21, 22) und einen mittleren/äußeren Bereich (23, B; 24) mit je einem eigenen Flüssigkeitskreislauf durch die Schläuche oder Rohre des Bereiches unterteilt,
**c)** im Wärmeentnahmebetrieb wird durch thermisch gesteuerte Ventile (29a, b, c) primär aus dem Flüssigkeitskreislauf des mittleren/äußeren Wärmespeicherbereichs (23, 24) und sekundär aus dem Flüssigkeitskreislauf des zentralen Wärmespeicherbereichs (21) Flüssigkeit in eine Heizanlage (17, 18) des Gebäudes gepumpt,
**d)** im Wärmespeicherbetrieb wird durch thermisch gesteuerte Ventile (9, 10) aus dem Flüssigkeitskreislauf (7, 8) jedes Bereichs des Solarabsorbers primär dem Flüssigkeitskreislauf (21) des zentralen Wärmespeicherbereichs und sekundär dem Flüsskeitskreislauf (23, 24) des mittleren/äußeren Wärmespeicherbereichs Flüssigkeit zugeführt,
**dadurch gekennzeichnet, daß**
die Flüssigkeit zugeführt wird, wenn ihre Temperatur aus dem Kreislauf des jeweiligen Bereichs wenigstens um einen Wert im Bereich von 2 bis 8°C, vorzugsweise 4°C, höher ist als die Temperatur des jeweiligen Feststoffspeicherbereichs (21, 22, 23, 24, 26),
**e)** der Solarabsorber Schläuche oder Rohre (7, 8) aufweist, die zwischen der Dachhaut und der darunter angeordneten Dämmschicht (6) verlegt sind, und
**f)** der Solarabsorber in wenigstens zwei Bereiche (7, 8) mit je einem eigenen Flüssigkeitskreislauf durch die Schläuche oder Rohre des Bereichs unterteilt ist.

2. Energieanlage nach Anspruch 1,
dadurch gekennzeichnet,
daß der Solar-Absorber in wenigstens drei Bereiche unterteilt ist, die unterschiedlich orientierten Dachabschnitten zugeordnet ist.

3. Energieanlage nach Anspruch 1 oder 2,
dadurch gekennzeichnet,
daß Solarabsorberbereiche (Fig. 2: I, II, III) auf der Rücklaufseite (47, 48, 49) über thermisch gesteuerte Ventile (50, 51, 52) zusammengeführt sind und gemeinsam einen Kollektor (40) speisen, und auf der Vorlaufseite (35, 36, 37) über eine Pumpe (39) gemeinsam den zusammengeführten Rücklaufseiten (41, 42, 43) des zentralen Feststoffspeicherbereichs (21, C) und dem des mittleren/äußeren Feststoffspeicherbereichs (23, B; 24, A) zugeführt sind, daß die Vorlaufseiten des zentralen Feststoffspeicherbereichs (10) und des mittleren/äußeren Feststoffspeicherbereichs (A, B) über je ein thermisch gesteuertes Ventil (44, 45, 46) in den Kollektor (40) münden und
daß zur Aufrechterhaltung des Kreislaufs eine Verbindung (54) über ein thermisch gesteuertes Ventil (55) zwischen dem Eingang der Pumpe (39) und dem Kollektor (40) vorgesehen ist.

4. Energieanlage nach Anspruch 1, 2 oder 3,
dadurch gekennzeichnet,
daß die Schläuche oder Rohre (7, 8) des Solarabsorbers in mäanderförmig verlaufenden Rinnen oder Nuten der Dämmschicht (6) verlegt sind.

5. Energieanlage nach einem der Ansprüche 1 bis 4,
gekennzeichnet durch drei Wärmespeicherbereiche, nämlich einen mittleren, den zentralen Bereich (21, C) umgebenden Bereich (23, B) und einen äußeren, den mittleren Bereich (23) umgebenden Bereich (24, A).

6. Energieanlage nach Anspruch 5,
dadurch gekennzeichnet,
daß der äußere Bereich (24) des Feststoff-Wärmespeichers trichterförmig nach unten erweitert ist und außerhalb des Gebäudegrundrisses durch eine Wärmedämmschicht (4) abgedeckt ist.

7. Energieanlage nach einem der Ansprüche 1 bis 6,
dadurch gekennzeichnet,
daß der äußere Bereich (24, A) des Festkörper-Wärmespeichers von einem peripheren Speicherbereich (26) umgeben ist.

8. Energieanlage nach einem der Ansprüche 1 bis 7,
dadurch gekennzeichnet,
daß die wenigstens ein Teil der Gebäudeaußenwände (1, 2) flüssigkeitsdurchströmte Schlauch- oder Rohrsysteme (17, 18) enthalten.

9. Energieanlage nach Anspruch 8,
dadurch gekennzeichnet,
daß die Gebäudeaußenwände (1, 2) auf der Außenseite mit einer absorptionserhöhenden, transparenten Beschichtung (TWD) oder Verkleidung versehen sind.

10. Energieanlage nach Anspruch 8 oder 9,
dadurch gekennzeichnet,
daß die Schlauch- oder Rohrsysteme (17, 18) der Gebäudeaußenwände (1, 2) über thermisch gesteuerte Ventile (29a, b, c, d) mit den Flüssigkeitskreisläufen (21, 23, 24, 26) der Festkörper-Wärmespeicherbereich verbunden ist.

11. Energieanlage nach einem der Ansprüche 1 bis 10,
gekennzeichnet durch einen Brauchwasser-Wärmetauscher (31), der über thermisch gesteuerte Ventile (32) als Bypass und mit Vorrang an denjenigen Bereich (7, 8) des Solar-Absorbers angeschlossen ist, welcher die höchste Temperatur hat.

12. Energieanlage nach einem der Ansprüche 1 bis 11,
dadurch gekennzeichnet,
daß der Feststoff-Wärmespeicher als Speichermaterial eine Schotter- oder Kiespackung mit einer Stärke von wenigstens 60 cm enthält.

13. Energieanlage nach einem der Ansprüche 1 bis 12,
dadurch gekennzeichnet,
daß der zentrale Bereich (21) des Festkörper-Wärmespeichers eingelagerte Metallpakete (22), Stahlträger, Autowürfel oder ähnliches Material mit hoher spezifischer Wärme enthält.

14. Energieanlage nach einem der Ansprüche 1 bis 13,
dadurch gekennzeichnet,
daß der Festkörper-Wärmespeicher und insbesondere sein zentraler Bereich (21) bodenseitig durch eine Wärmedämmschicht (25) isoliert ist.

15. Energieanlage nach einem der Ansprüche 1 bis 14,
dadurch gekennzeichnet,
daß als Flüssigkeit Wasser, oder ein Frostschutzmittel, verwendet wird.

16. Energieanlage nach einem der Ansprüche 1 bis 15,
dadurch gekennzeichnet,
daß zur Belüftung Öffnungen, insbesondere in den Fensterrahmen, vorgesehen sind, in denen an die Schlauch- oder Rohrsysteme (17, 18) der Gebäudeaußenwände (1, 2) angeschlossene Wärmetauscher mit von den Flüssigkeiten durchströmten Lamellen angeordnet sind.

17. Energieanlage nach einem der Ansprüche 1 bis 15,
dadurch gekennzeichnet,
daß zur Belüftung des Gebäudes ein äußerer, um den peripheren Speicherbereich (26) herum angeordneter und ein innerer, im Feststoffspeicher (21, 23, 24) verlaufender Luftansaugkanal vorgesehen sind, und daß gesteuert durch ein Mehrwegeventil im Sommerbetrieb gekühlte Luft durch den äußeren Kanal und im Winterbetrieb vorgewärmte Luft durch den inneren Kanal angesaugt und in das Gebäude geblasen wird.

## Claims

1. An energy system for buildings, using solar absorbers, heat exchangers and heat accumulators, with the following features:
a) a solid matter heat accumulator (21, 22, 23, 24, 26) is disposed beneath the building and heat can be fed to it or withdrawn therefrom by means of pipes or hoses laid in the solid matter heat accumulator,
b) the solid matter heat accumulator is divided into at least two zones, namely a central zone (21, 22) and a middle/outer zone (23, B; 24), each having its own liquid circuit through the hoses or pipes of the zone,
c) for heat withdrawal, liquid is pumped into a heating system (17, 18) of the building by means of thermally controlled valves (29a, b, c) primarily from the liquid circuit of the middle/outer heat accumulator zone (23, 24) and secondarily from the liquid circuit of the central heat accumulator zone (21),
d) for heat accumulator operation liquid is fed by means of thermally controlled valves (9, 10) from the liquid circuit (7, 8) of each zone of the solar absorber primarily to the liquid circuit (21) of the central heat accumulator zone and secondarily to the liquid circuit (23, 24) of the middle/outer heat accumulator zone,
characterised in that
the liquid is supplied when its temperature from the circuit of the respective zone is higher, at least by a value in the range of 2 to 8°C, preferably 4°C, than the temperature of the respective solid matter accumulator zone (21, 22, 23, 24, 26),
e) the solar absorber comprises hoses or pipes (7, 8) laid between the roof skin and the insulation layer (6) disposed therebeneath, and
f) the solar absorber is divided into at least two zones (7, 8) each having its own liquid circuit through the hoses or pipes of the zone.

2. An energy system according to claim 1,
characterised in that the solar absorber is divided into at least three zones, associated with which are roof sections having different orientations.

3. An energy system according to claim 1 or 2,
characterised in that on the return side (47, 48, 49) solar absorber zones (Fig. 2: I, II, III) are combined via thermally controlled valves (50, 51, 52) and jointly feed a collector (40), and on the flow side (35, 36, 37) are fed jointly via a pump (39) to the combined return sides (41, 42, 43) of the central solid matter accumulator zone (21, C) and that of the middle/outer solid matter accumulator zone (23, B; 24, A), in that the flow sides of the central solid matter accumulator zone (10) and of the middle/outer solid matter accumulator zone (A, B) lead into the collector (40) in each case via a thermally controlled valve (44, 45, 46) and in that to maintain the circuit a connection (54) is provided via a thermally controlled valve (55) between the inlet of the pump (39) and the collector (40) .

4. An energy system according to claim 1, 2 or 3,
characterised in that the hoses or pipes (7, 8) of the solar absorber are laid in meandering channels or grooves in the insulation layer (6).

5. An energy system according to any one of claims 1 to 4, characterised by three heat accumulator zones, namely a middle zone (23, B) surrounding the central zone (21, C) and an outer zone (24, A) surrounding the middle zone (23).

6. An energy system according to claim 5,
characterised in that the outer zone (24) of the solid matter heat accumulator widens out downwardly in the form of a funnel and is covered by a heat insulation layer (4) outside the building floor plan.

7. An energy system according to any one of claims 1 to 6, characterised in that the outer zone (24, A) of the solid matter heat accumulator is surrounded by a peripheral accumulator zone (26).

8. An energy system according to any one of claims 1 to 7, characterised in that the at least one part of the building outer walls (1, 2) contain hose or pipe systems (17, 18) through which liquid flows.

9. An energy system according to claim 8,
characterised in that the building outer walls (1, 2) are provided with an absorption-increasing transparent coating (TWD) or cladding on the outside.

10. An energy system according to claim 8 or 9,
characterised in that the hose or pipe systems (17, 18) of the building outer walls (1, 2) are connected via thermally controlled valves (29a, b, c, d) to the liquid circuits (21, 23, 24, 26) of the solid matter heat accumulator zone.

11. An energy system according to any one of claims 1 to 10, characterised by a service water heat exchanger (31) which is connected via thermally controlled valves (32) as a bypass and with priority to that zone (7, 8) of the solar absorber which has the highest temperature.

12. An energy system according to any one of claims 1 to 11, characterised in that the solid matter heat accumulator contains accumulator material in the form of a crushed stone or gravel packing of a thickness of at least 60 cm.

13. An energy system according to any one of claims 1 to 12, characterised in that the central zone (21) of the solid matter heat accumulator contains embedded metal packets (22), steel girders, crushed vehicle scrap or similar material of high specific heat.

14. An energy system according to any one of claims 1 to 13, characterised in that the solid matter heat accumulator, and particularly its central zone (21) is insulated on the base side by a thermal insulation layer (25).

15. An energy system according to any one of claims 1 to 14, characterised in that the liquid used is water or an anti-freeze.

16. An energy system according to any one of claims 1 to 15, characterised in that openings are provided, particularly in the window frames, for ventilation purposes, heat exchangers being disposed in said openings, said heat exchangers being connected to the hose or pipe systems (17, 18) of the building outer walls (1, 2) and having laminations through which the liquids flow.

17. An energy system according to any one of claims 1 to 15, characterised in that an outer air intake duct disposed around the peripheral accumulator zone (26) and an inner air intake duct extending in the solid matter accumulator (21, 23, 24) are provided for building ventilation and in that under the control of a multi-way valve cool air is intaken through the outer duct and blown into the building in summer while in winter operation preheated air is intaken through the inner duct and blown into the building.

## Revendications

1. Installation de gestion d'énergie pour bâtiments, utilisant des absorbeurs solaires, des échangeurs thermiques et des accumulateurs thermiques, présentant les caractéristiques suivantes:
a) un accumulateur thermique à matériaux solides (21, 22, 23, 24, 26) est installé sous le bâtiment, accumulateur qui peut être alimenté en chaleur, et à partir duquel de la chaleur peut être prélevée, par l'intermédiaire de canalisations flexibles ou rigides, qui y sont posées.
b) l'accumulateur thermique à matériaux solides est divisé en au moins deux zones, à savoir, une zone centrale (21, 22) et une zone intermédiaire/extérieure (23, B; 24), comportant chacune son propre circuit de fluide passant par les tuyaux flexibles ou tubes rigides de cette zone,
c) en mode prélèvement de chaleur, du fluide est pompé vers une installation de chauffage (17, 18) du bâtiment, par l'intermédiaire de vannes (29a, b, c) à commande thermique, en étant puisé de façon primaire dans le circuit de fluide de la zone intermédiaire/extérieure (23, 24) de l'accumulateur thermique, et de façon secondaire dans le circuit de fluide de la zone centrale (21) de l'accumulateur thermique,
d) en mode accumulation de chaleur, du fluide est acheminé, par l'intermédiaire de vannes (9, 10) à commande thermique, de façon primaire au circuit de liquide (21) de la zone centrale de l'accumulateur thermique, et de façon secondaire au circuit de liquide (23, 24) de la zone intermédiaire/extérieure de l'accumulateur thermique, à partir du circuit de fluide (7, 8) de chaque zone de l'absorbeur solaire,
caractérisée en ce que
l'alimentation en fluide est commandée quand sa température, à la sortie du circuit de la zone correspondante, est supérieure à la température de la zone d'accumulateur correspondante (21, 22, 23, 24, 26) à matériaux solides, d'une valeur de l'ordre d'au moins 2 à 8 °C, de préférence d'une valeur de 4 °C,
e) l'absorbeur solaire comporte des tuyaux flexibles ou tubes rigides (7, 8) installés entre la couverture du toit et la couche isolante (6) située en dessous de celle-ci, et en ce que
f) l'absorbeur solaire est divisé en au moins deux zones (7, 8) comportant chacune son propre circuit de fluide passant par les tuyaux flexibles ou tubes rigides.

2. Installation de gestion d'énergie selon la revendication 1, caractérisée en ce que l'absorbeur solaire est divisé en au moins trois zones, qui sont associées à des zones de toiture présentant des orientations différentes.

3. Installation de gestion d'énergie selon la revendication 1 ou 2, caractérisée en ce que
les zones d'absorbeur solaire (I, II, III sur la figure 2) se rejoignent, par leur côté sortie (47, 48, 49), via des vannes (50, 51, 52) à commande thermique, et alimentent conjointement un collecteur (40), et sont raccordées, par leur côté arrivée (35, 36, 37), via une pompe (39), aux côtés sortie réunis (41, 42, 43) de la zone centrale (21, C) de l'accumulateur à matériaux solides et des zones intermédiaire/extérieure (23, B; 24, A) de l'accumulateur à matériaux solides, en ce que
les côtés arrivée de la zone centrale (10) de l'accumulateur à matériaux solides et des zones intermédiaire/extérieure (A, B) de l'accumulateur à matériaux solides débouchent chacune dans le collecteur (40), via une vanne respective (44, 45, 46) à commande thermique, et en ce que
pour maintenir la circulation, une liaison (54) réalisée au moyen d'une vanne (55) à commande thermique est prévue entre l'entrée de la pompe (39) et le collecteur (40).

4. Installation de gestion d'énergie selon la revendication 1, 2 ou 3, caractérisée en ce que les tuyaux flexibles ou tubes rigides (7, 8) de l'absorbeur solaire sont installés dans des canaux ou rainures en forme de méandres, ménagées dans la couche isolante (6).

5. Installation de gestion d'énergie selon l'une des revendications 1 à 4, caractérisée par trois zones d'accumulation de chaleur, à savoir, une zone intermédiaire (23, B) entourant la zone centrale (21, C), et une zone extérieure (24, A) entourant la zone intermédiaire (23).

6. Installation de gestion d'énergie selon la revendication 5, caractérisée en ce que la zone extérieure (24) de l'accumulateur thermique à matériaux solides s'évase en forme d'entonnoir vers le bas et est couverte par une couche calorifuge (4) à l'extérieur de la surface au sol du bâtiment.

7. Installation de gestion d'énergie selon l'une des revendications 1 à 6, caractérisée en ce que la zone extérieure (24, A) de l'accumulateur thermique à matériaux solides est entourée par une zone d'accumulateur périphérique (26).

8. Installation de gestion d'énergie selon l'une des revendications 1 à 7, caractérisée en ce qu'une partie au moins des murs extérieurs (1, 2) du bâtiment contient des systèmes de tuyauteries flexibles ou rigides (17, 18) dans lesquels circule un fluide.

9. Installation de gestion d'énergie selon la revendication 8, caractérisée en ce que les murs extérieurs (1, 2) du bâtiment sont pourvus, du côté extérieur, d'un revêtement ou habillage transparent augmentant l'absorption (TWD).

10. Installation de gestion d'énergie selon la revendication 8 ou 9, caractérisée en ce que les systèmes de tuyaux flexibles ou rigides (17, 18) des murs extérieurs (1, 2) du bâtiment sont reliés aux circuits de fluide (21, 23, 24, 26) des zones d'accumulateur à matériaux solides par l'intermédiaire de vannes (29a, b, c) à commande thermique.

11. Installation de gestion d'énergie selon l'une des revendications 1 à 10, caractérisée par un échangeur thermique (31) à eau sanitaire, qui est relié, via des vannes (32) à commande thermique, et de façon prioritaire, à la zone (7, 8) de l'absorbeur solaire, qui présente la température la plus élevée.

12. Installation de gestion d'énergie selon l'une des revendications 1 à 11, caractérisée en ce que l'accumulateur thermique à matériaux solides contient, comme matériau d'accumulation, un lit de cailloux ou de gravier d'une épaisseur d'au moins 60 cm.

13. Installation de gestion d'énergie selon l'une des revendications 1 à 12, caractérisée en ce que la zone centrale (21) de l'accumulateur thermique à matériaux solides contient un dépôt de paquets métalliques (22), de poutres d'acier, de cubes de ferraille compactée, ou d'autres matières à haute chaleur massique.

14. Installation de gestion d'énergie selon l'une des revendications 1 à 13, caractérisée en ce que l'accumulateur thermique à matériaux solides, et notamment la zone centrale (21) de celui-ci, est isolé(e), côté sol, par une couche calorifuge (25).

15. Installation de gestion d'énergie selon l'une des revendications 1 à 14, caractérisée en ce que l'on utilise, comme fluide, de l'eau ou un produit antigel.

16. Installation de gestion d'énergie selon l'une des revendications 1 à 15, caractérisée en ce que, pour assurer l'aération, des ouvertures sont prévues, notamment dans les encadrements des fenêtres, ouvertures dans lesquelles sont disposés des échangeurs thermiques raccordés aux systèmes de tuyaux flexibles ou rigides (17, 18) des murs extérieurs (1, 2) du bâtiment, échangeurs dans les lamelles desquels circulent lesdits liquides.

17. Installation de gestion d'énergie selon l'une des revendications 1 à 15, caractérisée en ce que, pour assurer l'aération du bâtiment, un canal d'aspiration extérieur, aménagé autour de la zone d'accumulation périphérique (26), et un canal d'aspiration intérieur, s'étendant dans l'accumulateur à matériaux solides (21, 23, 24), sont prévus, et en ce qu'en mode de fonctionnement été, de l'air refroidi est aspiré via le canal extérieur, et qu'en mode de fonctionnement hiver, de l'air préchauffé est aspiré via le canal intérieur, par l'intermédiaire d'un distributeur multivoie, et est soufflé à l'intérieur du bâtiment.
